# EUROPÄISCHE PATENTSCHRIFT

(11) **EP 2 392 228 B1**
(45) Veröffentlichungstag und Bekanntmachung des Hinweises auf die Patenterteilung: **15.05.2013**
(21) Anmeldenummer: 11166543.6
(22) Anmeldetag: 18.05.2011
(51) Int. Cl.: A47B 55/02, F16B 12/32, F16B 12/42

(54) **Regalsystem**
Shelf system
Système de rayonnage

(30) Priorität: 02.06.2010 DE 102010022470
(43) Veröffentlichungstag der Anmeldung: 07.12.2011
(73) Patentinhaber: WANZL METALLWARENFABRIK GMBH, 89336 Leipheim (DE)
(72) Erfinder: Götz, Christian, 89340, Leipheim (DE); Handerer, Manfred, 89331, Winterbach (DE)

(56) Entgegenhaltungen:
- DE-U1- 9 102 776
- DE-U1- 29 606 858
- US-A- 5 588 541

## Beschreibung

Die Erfindung betrifft ein Regalsystem mit den Merkmalen im Oberbegriff des Hauptanspruchs.

Es gibt verschiedene Arten von Regalsystemen. Meist sind sie aus Säulen gebildet zwischen denen Gitterwände angebracht sind. Zum Anordnen an die Säulen weisen die Gitterwände Klammern auf, die ortsfest an den Gitterwänden befestigt sind und mittels einer Schraube an der Säule gesichert werden.

Der Auf- und Abbau der Wände erweist sich als schwierig, da die Zugänglichkeit zu den Schrauben meist nur schwierig gegeben ist. Ferner lassen sich die Schrauben oft nur unter Zuhilfenahme eines elektrischen Werkzeugs lösen.

Aus dem Stand der Technik sind weiterhin verschiedene Klammern bekannt, mittels derer Drähte an Säulen insbesondere Zaunpfählen angeordnet werden. Eine solche Klammer ist beispielsweise in der DE 34 22 049 A1 offenbart. Die Klammer weist einen halbrunden Bereich und zwei Schenkel mit krallenartigen Spitzen auf, die in einer konisch gebildeten nutartigen Hinterschneidung angeordnet werden. Eine ähnliche Klammer ist aus DE 30 33 880 A1 bekannt. Eine weitere Klammer, die zum Anordnen von Drähten an einem Zaunpfahl eingesetzt wird, ist aus der EP 1 743 992 A2 bekannt. Der Zaunpfahl weist zwei Schlitze auf. In diese wird zum Befestigen der Zaunstäbe die u-förmig gebildete Kammer geschoben und mittels einer Schraube gesichert.

Ferner sind aus dem Stand der Technik Klammern bekannt, die Gitterwände von Verkaufstischen mit dem Unterteil des Tisches verbinden. Ein Tisch mit einer solchen Klammer ist z.B. in der DE 91 02 776 U1 oder der DE 197 15 955 A1 beschrieben. Jede Klammer ist halbrund gebogen und weist zwei nach unten gerichtete Schenkel auf, in welchen je ein nach außen gerichteter Vorsprung federnd angeordnet ist. Im halbrunden Bereich ist der Draht einer Gitterwand aufgenommen und mittels der Vorsprünge an einer Tischplatte gesichert. Die Tischplatte weist Öffnungen auf, durch die die Klammern mit ihren Schenkeln bewegt werden, um die Gitterteile an der Tischplatte anzuordnen.

Des Weiteren sind Systeme offenbart, die zum Anordnen und Entfernen eines Autoradios am Armaturenbrett eines Autos eingesetzt werden. In der DE 35 21 089 C2 ist ein Demontagewerkzeug vorgesehen, das aus einem keilförmigen Blech gebildet ist und einen nicht näher beschriebenen Befestigungsmechanismus von Autoradio und Armaturenbrett löst. Demgegenüber wird in der DE 29 03 176 C2 ein aus einem Draht gebildetes bügelförmiges Demontagewerkzeug verwendet.

Die Aufgabe besteht nun darin, ein verbessertes Regalsystem zu beschreiben, so dass ein einfaches Anbringen der Wände an der Säule und ein einfaches Lösen der Wände von der Säule möglich ist.

Die Erfindung löst die Aufgabe mit den Merkmalen im Hauptanspruch. Weitere vorteilhafte Ausführungen sind in den Unteransprüchen beschrieben.

Die Montage der Wände erfolgt durch manuelles Einsetzen der Klammer an Gitterstab und Säule. Für die Demontage der Wand wird dann das Demontagewerkzeug verwendet. Somit erfolgt sowohl die Montage als auch die Demontage auf einfache Art und Weise, wodurch Zeit und Kosten eingespart werden können.

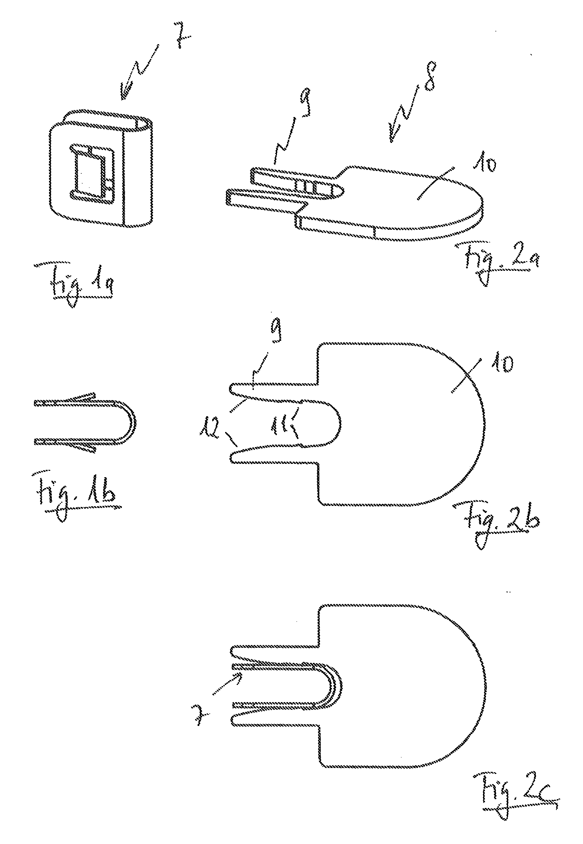

Die Erfindung wird anhand eines Ausführungsbeispiels näher erläutert. Es zeigt
- Fig. 1a: eine Klammer in 3-D-Ansicht,
- Fig. 1 b: dieselbe Klammer in Draufsicht,
- Fig. 2a: ein Demontagewerkzeug in 3-D-Ansicht,
- Fig. 2b: dasselbe Demontagewerkzeug in Draufsicht,
- Fig. 2c: dasselbe Demontagewerkzeug mit einer Klammer im vorderen Bereich,
- Fig. 3: eine Säule mit Aussparungen,
- Fig. 4: ein Regalsystem mit einer Säule und einer Gitterwand sowie einer Klammer;
- Fig. 5: dasselbe Regalsystem mit einer Säule, einer Gitterwand, einer Klammer und einem Demontagewerkzeug, das in die waagrechte Aussparung der Säule bewegt wird,
- Fig. 6: dasselbe Regalsystem mit einer Säule und einer Gitterwand, bei dem die Klammer mittels des Demontagewerkzeugs herausgenommen ist.

Die Erfindung betrifft ein Regalsystem 1 mit Säulen 2 und mit Wänden 3. Zwischen zwei Säulen 2 sind Wände 3 und hierbei insbesondere Gitterwände angeordnet. Jede Säule 2 weist Aussparungen 4 auf. Diese sind an den Außenseiten jeder Säule 2 vorgesehen und werden zum Anordnen der Wände 3 verwendet.

Ferner ist eine Klammer 7 vorgesehen, die den äußersten Draht der Wand 3 umschließt und mittels derer die Wand 3 wechselbar an einer dieser Säulen 2 angebracht wird.

Die Klammer 7, wie sie in den Figuren 1a und 1b dargestellt ist, stellt ein zusätzliches Bauteil dar. Sie weist einen halbrund gebogenen Bereich und zwei nach unten gerichtete Schenkel auf, in denen je ein nach außen gerichteter Vorsprung federnd angeordnet ist. Jeder federnde Vorsprung weist einen in Richtung gebogenen Bereich größer werdenden Abstand auf.

In dem halbrund gebogenen Bereich der Klammer 7 wird der Draht der Wand 3 aufgenommen. Dann wird die Klammer 7 an der Säule 2 angeordnet. Mit dem Demontagewerkzeug 8 lässt sich die Klammer 7 wieder entfernen.

Es hat sich als sinnvoll erwiesen, dass das Demontagewerkzeug 8, wie es auch in den Figuren 2a bis c dargestellt ist, aus einem wenige mm starken Metallblech gebildet ist. Das Demontagewerkzeug 8 weist einen vorderen Bereich 9 für die Aufnahme der Klammer 7 und einen hinteren Bereich 10 als Griff auf.

Das Demontagewerkzeug 8 sieht hierbei insbesondere einen U-förmigen vorderen Bereich 9 und einen rechteckigen hinteren Bereich 10 vor. Der vordere Bereich 9 ist zusätzlich mit kleinen Häkchen 11 versehen, die zusätzlich ein sicheres Greifen der Klammer 7 durch das Demontagewerkzeug 8 ermöglichen, da diese Häkchen 11 insbesondere die nach außen gerichteten Vorsprünge der Klammer 7 nach innen drücken und dadurch ein verbessertes Lösen der Klammer 7 von der Säule 2 ermöglichen. Zusätzlich hierzu weist das Demontagewerkzeug 8 Schrägen 12 auf.

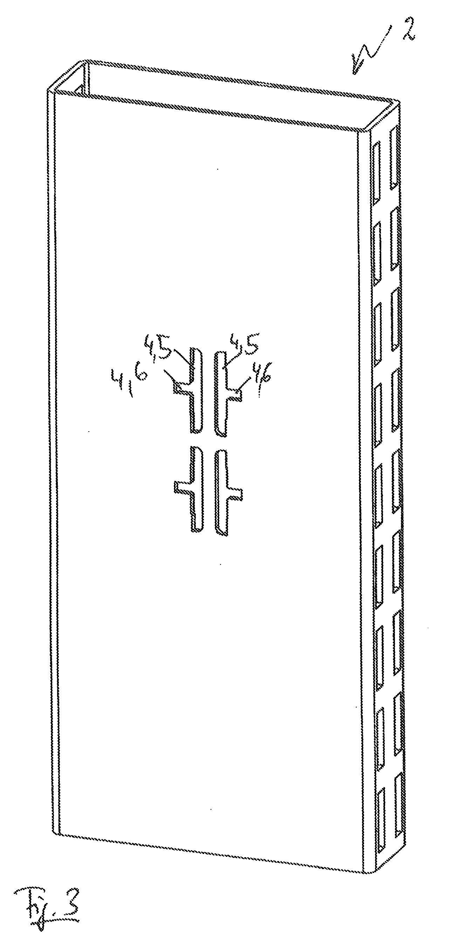

Am hinteren Bereich 10 kann ferner eine Öffnung vorgesehen sein. Figur 2c zeigt, wie die Klammer 7 in dem Demontagewerkzeug 8 aufgenommen ist.
Jede Säule 2, wie sie auch in Figur 3 dargestellt ist, weist an ihrer planen Fläche eine Vielzahl von Aussparungen 4 auf, wobei senkrechte Aussparungen 5 für die Aufnahme der Klammer 7 und zusätzlich waagrechte Aussparungen 6 für die Aufnahme des Demontagewerkzeugs 8 vorgesehen sind.

Die waagrechte Aussparung 6 ist vorzugweise mittig zur senkrechten Aussparung 5 angeordnet und mit dieser verbunden. In Figur 3 sind vier Aussparungen 5, 6 dargestellt, die für die Aufnahme von zwei Klammern 7 vorgesehen sind. Die senkrechten und waagrechten Aussparungen 5, 6 sind gegenüberliegend und symmetrisch angeordnet.

Die senkrechte Aussparung 5 ist in ihrer Höhe und Breite derart gebildet, dass die Klammer 7 aufgenommen werden kann. Die waagreche Aussparung 6 richtet sich bezüglich ihrer Größe nach der Größe des Demontagewerkzeugs 8. Eine Stärke von 3 mm für das Demontagewerkzeug 8 hat sich als sinnvoll erwiesen.

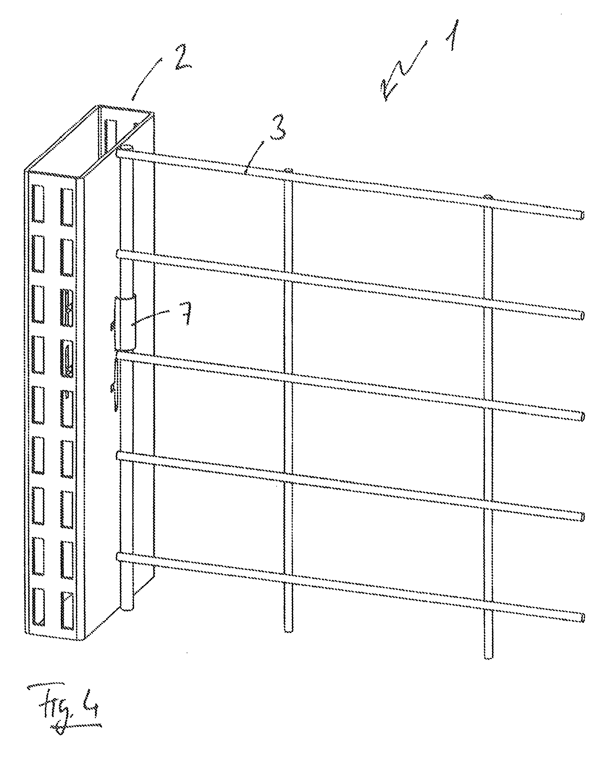

Figur 4 zeigt ein Regalsystem 1 mit einer Säule 2 und einer Gitterwand 3 sowie einer Klammer 7. Die Klammer 7 hält die Gitterwand 3 zwischen einer ersten und einer zweiten nicht dargestellten Säule 2. Die Gitterwand 3 kann wechselbar an den beiden Säulen 2 angeordnet werden. Die Klammern 7 sind eingepasst in die Aussparungen 5, 6 und wechselbar an der Säule 2 angeordnet. Die Klammer 7 ist überwiegend in der Säule 2 integriert und umgreift zusätzlich den senkrechten Enddraht der Gitterwand 3.

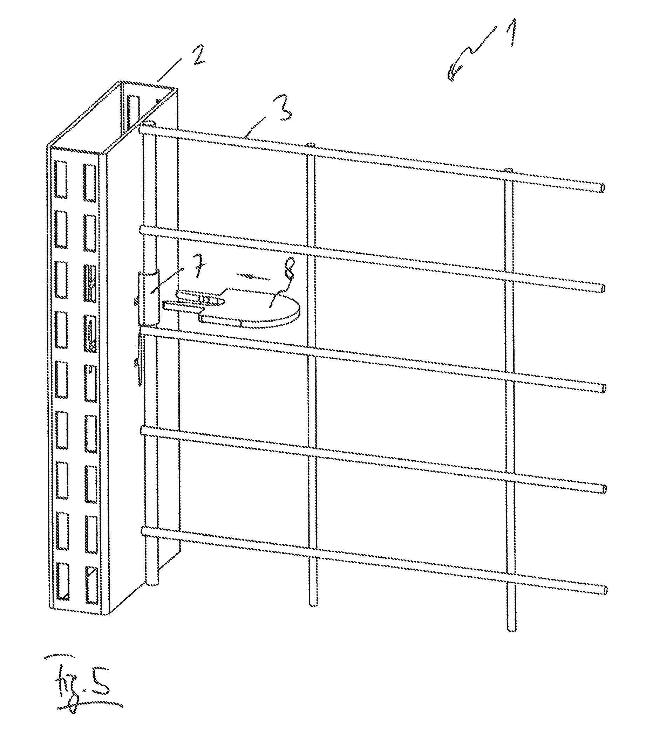

In Figur 5 ist dargestellt, wie das Demontagewerkzeug 8 in Richtung Klammer 7 bewegt wird, um in die waagrechte Aussparung 6 der Säule 2 einzugreifen und die Klammer 7 lösen zu können.

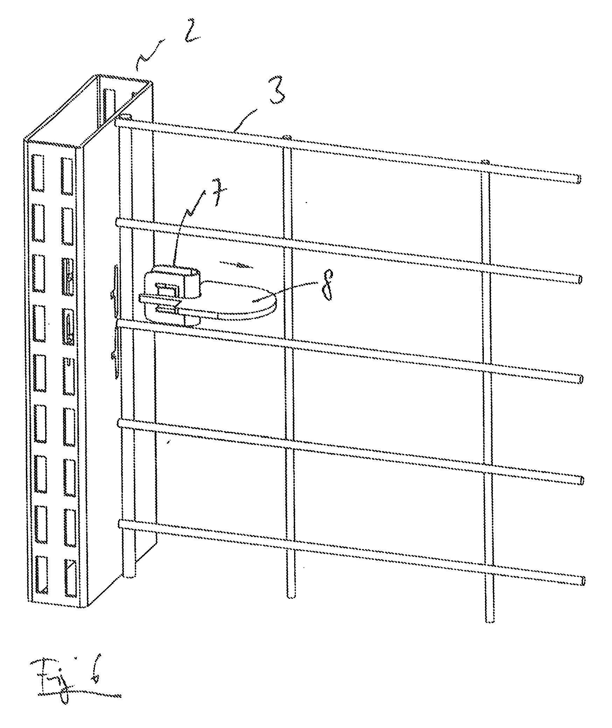

In Figur 6 ist die Klammer 7 bereits gelöst. Die Innenfläche des vorderen Bereichs 9 des Demontagewerkzeugs 8 umfasst die beiden nach außen gerichteten federnd angeordneten Vorsprünge der Klammer 7 und drückt diese zusammen. Die Klammer 7 kann somit vollständig herausgenommen werden und die Gitterwand 3 von der Säule 2 gelöst werden. Ein einfacher Abbau des Regalsystems 1 und ein Platz sparendes Zusammenlegen sind hierdurch möglich.

### Bezugszeichenliste

- 1: Regalsystem
- 2: Säule
- 3: Wand, Gitterwand
- 4: Aussparung
- 5: Senkrechte Aussparung
- 6: Waagrechte Aussparung
- 7: Klammer
- 8: Demontagewerkzeug
- 9: Vorderer Bereich
- 10: Hinterer Bereich
- 11: Häkchen
- 12: Schrägen

## Patentansprüche

1. Regalsystem mit Säulen (2) und Wänden (3), wobei jede Säule (2) Aussparungen (4) aufweist und Klammern (7) vorgesehen sind, mittels derer eine Wand (3) wechselbar an einer Säule (2) angebracht werden kann, **dadurch gekennzeichnet, dass** ein Demontagewerkzeug (8) vorgesehen ist, mit dem sich jede Klammer (7) von der Säule (2) entfernen lässt,
so dass die Klammer (7) vollständig herausgenommen werden kann,
wobei jede Säule (2) an ihrer planen Fläche eine Vielzahl von Aussparungen (4) aufweist, wobei senkrechte Aussparungen (5) für die Aufnahme der Klammer (7) und zusätzlich waagrechte Aussparungen (6) für die Aufnahme des Demontagewerkzeugs (8) vorgesehen sind.

2. Regalsystem nach Anspruch 1, **dadurch gekennzeichnet, dass** das Demontagewerkzeug (8) aus einem wenige mm starken Metallblech gebildet ist.

3. Regalsystem nach Anspruch 1, **dadurch gekennzeichnet, dass** das Demontagewerkzeug (8) einen vorderen Bereich (9) aufweist.

4. Regalsystem nach Anspruch 1, **dadurch gekennzeichnet, dass** das Demontagewerkzeug (8) einen hinteren Bereich (10) aufweist.

5. Regalsystem nach Anspruch 3, **dadurch gekennzeichnet, dass** das Demontagewerkzeug (8) einen U-förmigen vorderen Bereich (9) aufweist.

6. Regalsystem nach Anspruch 4, **dadurch gekennzeichnet, dass** das Demontagewerkzeug (8) einen rechteckigen hinteren Bereich (10) aufweist.

## Claims

1. A shelf system with columns (2) and walls (3), wherein each column (2) has cutouts (4), and clamps (7) are provided by means of which a wall (3) can be attached changeably to a column (2), **characterised in that** a dismantling tool (8) is provided with which each clamp (7) can be removed from the column (2),
so that the clamp (7) can be taken out completely,
each column (2) having on its planar surface a plurality of cutouts (4), with vertical cutouts (5) for receiving the clamp (7) and additionally horizontal cutouts (6) for receiving the dismantling tool (8) being provided.

2. A shelf system according to Claim 1, **characterised in that** the dismantling tool (8) is formed from a metal sheet a few mm thick.

3. A shelf system according to Claim 1, **characterised in that** the dismantling tool (8) has a front region (9).

4. A shelf system according to Claim 1, **characterised in that** the dismantling tool (8) has a rear region (10).

5. A shelf system according to Claim 3, **characterised in that** the dismantling tool (8) has a U-shaped front region (9).

6. A shelf system according to Claim 4, **characterised in that** the dismantling tool (8) has a rectangular rear region (10).

## Revendications

1. Système de rayonnage comprenant des colonnes (2) et des parois (3), chaque colonne (2) présentant des évidements (4), et des crampons (7) étant prévus pour permettre l'installation d'une paroi (3) sur une colonne (2), de manière interchangeable, **caractérisé par le fait qu'**il est prévu un outil de démontage (8) au moyen duquel chaque crampon (7) peut être dissocié d'avec la colonne (2),
de telle sorte que ledit crampon (7) puisse être intégralement extrait,
sachant que chaque colonne (2) est pourvue d'une multiplicité d'évidements (4) sur sa surface plane, des évidements verticaux (5) étant prévus pour recevoir le crampon (7), et des évidements horizontaux (6) étant additionnellement prévus pour recevoir l'outil de démontage (8).

2. Système de rayonnage selon la revendication 1, **caractérisé par le fait que** l'outil de démontage (8) est constitué d'une tôle métallique dont l'épaisseur ne mesure que quelques mm.

3. Système de rayonnage selon la revendication 1, **caractérisé par le fait que** l'outil de démontage (8) comporte une région antérieure (9).

4. Système de rayonnage selon la revendication 1, **caractérisé par le fait que** l'outil de démontage (8) comporte une région postérieure (10).

5. Système de rayonnage selon la revendication 3, **caractérisé par le fait que** l'outil de démontage (8) comporte une région antérieure (9) configurée en U.

6. Système de rayonnage selon la revendication 4, **caractérisé par le fait que** l'outil de démontage (8) comporte une région postérieure (10) rectangulaire.
